# EUROPEAN PATENT APPLICATION

(11) **EP 4 807 892 A1**
(43) Date of publication of application: **16.09.2026**
(21) Application number: 25873690.9
(22) Date of filing: 28.08.2025
(51) Int. Cl.: H01M 50/645, H01M 50/186, H01M 50/184, H01M 50/60, H01M 10/04, H01M 10/058, H01M 50/249

(54) **BATTERY CELL, MANUFACTURING METHOD OF SAME, AND BATTERY PACK AND VEHICLE INCLUDING SAME**

(30) Priority: 26.09.2024 KR 20240131037
(71) Applicant: LG Energy Solution, Ltd., Seoul 07335 (KR)
(72) Inventor: JEONG, Seok-Hun, Daejeon 34122 (KR); KIM, Jae-Hong, Daejeon 34122 (KR); KIM, Chun-Gon, Daejeon 34122 (KR)
(74) Representative: Goddar, Heinz J.
(86) International application number: PCT/KR2025/013198
(87) International publication number: WO 2026/071513

(57) **Abstract**

A battery cell of the present disclosure may include an electrode assembly in which a first electrode, a second electrode, and a separator interposed therebetween are wound around a winding axis; a battery housing configured to accommodate the electrode assembly through an open end formed on one side; a cap covering the open end and having an injection port formed centrally; an injection plug configured to be inserted into the injection port and configured to seal the injection port; and a gasket interposed between the injection plug and the cap and having chemical resistance to an electrolyte.

## Description

### TECHNICAL FIELD

The present disclosure relates to a battery cell, a method for manufacturing the same, and a battery pack and a vehicle including such a battery cell.

This application is based on and claims priority from Korean Patent Application No. 10-2024-0131037, filed on September 26, 2024, with the Korean Intellectual Property Office, the disclosure of which is incorporated herein in its entirety by reference.

### BACKGROUND ART

Secondary batteries having high applicability according to product groups and electrical characteristics such as high energy density are commonly applied not only to portable devices but also to an electric vehicle (EV) or a hybrid electric vehicle (HEV) driven by electric power sources.

Such secondary batteries are attracting attention as a new energy source to improve eco-friendliness and energy efficiency in that they have not only a primary advantage of dramatically reducing the use of fossil fuels, but also no by-products generated from the use of energy.

Secondary batteries widely used at present include lithium-ion batteries, lithium polymer batteries, nickel cadmium batteries, nickel hydrogen batteries, nickel zinc batteries, and the like. When a higher output voltage is required, a plurality of battery cells may be connected in series to form a battery module or a battery pack. Additionally, in order to increase the charging and discharging capacity, a plurality of battery cells may be connected in parallel to form a battery module or a battery pack. Therefore, the number of battery cells included in the battery module or battery pack may be variously set according to the required output voltage or the charging and discharging capacity.

There is an increasing demand for using a metal can-type cell as a battery cell applied to a vehicle battery pack. The shape of metal cans may be prismatic or cylindrical, and the cylindrical battery cell has a structure in which an electrode assembly in the form of a jelly-roll is accommodated inside the cylindrical can, and has an advantage of being more robust to impact or temperature than the pouch-type battery cell.

The process of manufacturing a battery cell using a cylindrical can may include the steps of deep drawing a metal sheet to form a circular bottom portion (closed surface) and a cylindrical tubular side wall portion connected thereto to manufacture the can, accommodating the electrode assembly into the can, and then covering and closing the open end of the can with a cap. As a closing method, seam welding or beading and crimping method may be used.

Meanwhile, in the case of a battery cell including this beading and crimping structure, there was a problem of increasing dead space within the battery in the winding axis direction to lower energy density.

Seam welding is a method of putting the circumference of the front end of the side wall portion of the battery housing and the circumference of the edge of the cap together and then welding them along the circumferential direction, and since the fixing structure is simple, this method may secure more volume inside the battery housing to accommodate the electrode assembly. Therefore, seam welding is more advantageous in securing electrical capacity relative to the same volume of the battery housing. However, since welding after injection is difficult, an injection port should be provided in the cap, and a process of injecting after welding and then sealing the injection port with a sealing part is required.

Specifically, when intending to fix the circumference of the open end of the battery housing and the cap by seam welding, a method in which a battery housing with an injection port at the bottom portion or a cap with an injection port is prepared, an electrode assembly is accommodated inside the battery housing, the battery housing and the cap are seam-welded, an electrolyte is injected through the injection port at the cap or the bottom portion of the battery housing, and the injection port is sealed after the injection is completed, may be applied. Seam welding or ball welding may be used for the closing method.

In the case of ball welding, welding (e.g., laser welding) may be performed after the ball is press-fitted. However, since the welding between the ball and the cap involves a gap, unlike typical butt welding, tightness is reduced and cracks may be easily formed. If such micro cracks occur, a sealed structure may not be formed. Additionally, a voltage drop may occur during the battery utilization process, which may lead to a defective cell being determined. Moreover, a thin cap acts as a constraint that prevents the ball from applying sufficient press-fit pressure, and thus there may be a risk of electrolyte leakage. In addition, residual electrolyte may remain around the injection port, which affects weldability. Additionally, during laser welding, pores in the welded portion may be formed depending on keyhole maintenance and the welding surface condition, which causes leakage.

Therefore, in order to enhance repeatability and reproducibility, there is a need to form an injection port sealing structure through mechanical bonding rather than welding.

### DISCLOSURE

### Technical Problem

The present disclosure is devised to solve the above-described problems, and therefore the present disclosure is directed to providing a battery cell with an improved sealing structure of an injection port and a method for manufacturing the same.

Additionally, the present disclosure is directed to providing an injection port sealing structure that may minimize crack formation during the sealing process of the injection port, prevent electrolyte leakage, and enhance repeatability and reproducibility, and a method for manufacturing the same.

Additionally, the present disclosure is directed to increasing energy density by excluding the beading and crimping structure in the battery cell.

The present disclosure is also directed to providing a vehicle including such a battery pack.

However, technical problems to be solved by the present disclosure are not limited to the above-described problems, and other problems not mentioned herein may be clearly understood by those skilled in the art from the following description of the present disclosure.

### Technical Solution

To solve the above problem, a battery cell of the present disclosure may include an electrode assembly in which a first electrode, a second electrode, and a separator interposed therebetween are wound around a winding axis; a battery housing configured to accommodate the electrode assembly through an open end formed on one side; a cap covering the open end and having an injection port formed centrally; an injection plug configured to be inserted into the injection port and configured to seal the injection port; and a gasket interposed between the injection plug and the cap and having chemical resistance to an electrolyte.

The gasket may have a heat deflection temperature of 130 degrees or higher and 170 degrees or lower under a load of 66 psi.

The gasket may have a water absorption rate of 0.05% or higher and 0.15% or lower.

The gasket may have a tensile strength of 50 MPa or more and 70 MPa or less.

The gasket may include polybutylene terephthalate (PBT).

The injection plug may be configured with a blind rivet.

The injection plug may include a body portion inserted into the injection port; a flange portion covering the injection port at the upper side of the cap and extending outward in a radial direction perpendicular to the winding axis direction from the upper end of the body portion; and a plastic deformation portion at least partially extending outward in the radial direction from the lower end of the body portion.

The diameter of the flange portion may be greater than the inner diameter of the injection port.

The maximum diameter of the plastic deformation portion may be greater than the inner diameter of the injection port.

At least a portion of the plastic deformation portion may include a horizontal plane substantially parallel to the lower surface of the cap.

The injection plug may include a mandrel hole extending in the winding axis direction from the upper surface of the injection plug.

The injection plug may further include a mandrel piece disposed inside the injection plug.

The injection plug may include a material having an elongation.

The gasket may have a ring shape surrounding the injection port periphery.

The gasket may be disposed between the upper surface of the cap and the lower surface of the flange portion of the injection plug.

The gasket may have a circular cross-section when cut in the winding axis direction centered on the winding axis.

The gasket may have a rectangular cross-section when cut in the winding axis direction centered on the winding axis.

The gasket may have a cylindrical structure that surrounds the side surfaces of the body portion and the plastic deformation portion and is open on both sides facing the winding axis direction.

The gasket may include a curved surface and at least a portion thereof may protrude in the radial direction.

The gasket may have an elongation of 40% or more and 150% or less.

The gasket may have a flexural modulus of 300 MPa or more and 2500 MPa or less.

A method for manufacturing a battery cell of the present disclosure may include a first step of inserting an electrode assembly in which a first electrode, a second electrode, and a separator interposed therebetween are wound around a winding axis through an open end of a battery housing; a second step of covering the open end of the battery housing with a cap; a third step of inserting an injection plug preform into an injection port formed in the cap; a fourth step of inserting a gasket between the injection plug preform and the cap; and a fifth step of connecting a riveting gun to a mandrel inserted into the injection plug preform and pulling the riveting gun upward to seal the injection port.

When the riveting gun is pulled upward, the injection plug preform may be plastically deformed.

A mandrel hole extending in the winding axis direction may be formed in the injection plug preform, and the injection plug preform may be configured such that the mandrel is inserted into the mandrel hole.

The mandrel may include a mandrel pin portion at least partially protruding outward from the injection plug preform; a mandrel head portion extending radially further outward than the mandrel pin portion from the lower end of the mandrel pin portion; and a vulnerable portion positioned between the mandrel pin portion and the mandrel head portion.

The mandrel hole may include a first region having an inner diameter of a first length; and a second region positioned below the first region and having an inner diameter of a second length longer than the first length.

The diameter of the mandrel head portion may be longer than the first length.

When the mandrel is pulled upward, the length of the injection plug preform in the winding axis direction may be reduced, and the maximum diameter of the injection plug preform may expand longer than the inner diameter of the injection port.

The mandrel may include iron (Fe).

When the mandrel is pulled upward, the gasket may be compressed in the winding axis direction, and thus the length of the gasket in the winding axis direction may be reduced.

When the mandrel is pulled upward, the mandrel pin portion and the mandrel head portion may be separated from the vulnerable portion when a certain force or more is applied.

The method for manufacturing a battery cell may further include, between the second step and the third step, a step of injecting an electrolyte into the injection port; a pre-charge step of partially charging the battery cell to activate the battery cell; a formation step of charging the battery cell to a higher voltage; and a degassing step of removing gas generated inside the battery cell.

And, the present disclosure may provide a battery pack including at least one battery cell according to the present disclosure.

And, the present disclosure may provide a vehicle including at least one battery cell according to the present disclosure.

### Advantageous Effects

According to one aspect of the present disclosure, an injection port may be sealed through a mechanical bonding such as riveting using an injection plug configured with a blind rivet, thereby improving the injection port sealing structure without the need for welding.

Additionally, according to another aspect of the present disclosure, a gasket may be provided between the injection plug and the cap to prevent electrolyte leakage and to electrically insulate the space between the injection plug and the cap.

Additionally, according to another aspect of the present disclosure, a gasket having chemical resistance to an electrolyte may be included to further strengthen the sealing structure inside the battery housing and to prevent electrolyte leakage more reliably.

Additionally, according to another aspect of the present disclosure, energy density may be increased by excluding the beading and crimping structure in the battery cell.

Additionally, according to another aspect of the present disclosure, degassing may be performed after the formation process and then the injection port may be sealed, thereby preventing residual gas from increasing the internal pressure of the battery cell and causing safety issues.

Additionally, according to still another aspect of the present disclosure, events resulting from thermal runaway in a vehicle including multiple battery packs, such as fire or explosion, may be prevented or delayed.

In addition, the present disclosure may have various other effects, which will be described in each embodiment, or descriptions of effects that may be easily inferred by those skilled in the art will be omitted.

### DESCRIPTION OF DRAWINGS

The accompanying drawings illustrate preferred embodiments of the present disclosure and together with the foregoing disclosure, serve to provide further understanding of the technical features of the present disclosure, and thus, the present disclosure is not construed as being limited to the drawing.
FIG. 1 is a perspective view showing the appearance of a battery cell according to an embodiment of the present disclosure.
FIG. 2 is an exploded perspective view of FIG. 1 according to an embodiment of the present disclosure.
FIG. 3 is a cross-sectional view of the battery cell of FIG. 1 taken along line A-A' according to an embodiment of the present disclosure.
FIG. 4 is a cross-sectional perspective view of the battery cell of FIG. 1 taken along line A-A'.
FIG. 5 is an enlarged view of portion B of FIG. 4.
FIG. 6 is a cross-sectional view of a cap, an injection plug, and a gasket according to an embodiment of the present disclosure.
FIG. 7 is a cross-sectional view showing a cap, an injection plug, and a gasket separated from each other according to an embodiment of the present disclosure.
FIG. 8 is a cross-sectional view of a cap, an injection plug, and a gasket according to another embodiment of the present disclosure.
FIG. 9 is a cross-sectional view of a cap, an injection plug, and a gasket according to still another embodiment of the present disclosure.
FIG. 10 is a cross-sectional view of a cap, an injection plug, and a gasket according to still another embodiment of the present disclosure.
FIG. 11 is a cross-sectional view of a cap, an injection plug, and a gasket according to still another embodiment of the present disclosure.
FIG. 12 is a view showing an injection plug preform and a gasket before riveting according to an embodiment of the present disclosure.
FIG. 13 is a view showing an injection plug preform and a gasket before riveting according to the embodiment of FIG. 11 of the present disclosure.
FIG. 14 is a cross-sectional view showing an injection plug preform and a gasket separated from each other before riveting according to an embodiment of the present disclosure.
FIG. 15 is a view for describing a battery pack according to an embodiment of the present disclosure.
FIG. 16 is a view for describing a vehicle including the battery pack of FIG. 15.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described in this specification and the configurations shown in the drawings are only some of the most preferred embodiments of the present disclosure, not intended to entirely represent the technical aspects of the present disclosure, so it should be understood that various equivalents and modifications may be made thereto at the time of filing the present application.

Additionally, the present disclosure includes various embodiments. For each embodiment, duplicate descriptions of substantially identical or similar configurations will be omitted, and differences will be mainly described.

Additionally, to help understanding of the present disclosure, the accompanying drawings are not illustrated on an actual scale, but the dimensions of some components may be exaggerated. Additionally, the same reference numeral may be assigned to the same component in different embodiments.

Although the first, second, and the like are used to describe various components, it is obvious that these components are not limited by these terms. These terms are used only to distinguish one component from another component, and unless expressly stated to the contrary, it is obvious that the first component may be the second component.

Throughout the specification, unless expressly stated to the contrary, each component may be singular or plural.

Hereinafter, when any configuration is disposed on the "upper (or lower)" of a component or "top (or bottom)" of a component, it may mean not only that any configuration is disposed in contact with the upper surface (or lower surface) of the component, but also that other configuration may be interposed between the component and any configuration disposed above (or below) the component.

Additionally, when it is described that a component is "connected", "coupled", or "in contact" to another component, the components may be directly connected to or in contact with each other, but it should be understood that other components may be "interposed" between each component, or each component may be "connected", "coupled", or "in contact" through another component.

As used herein, singular expressions include plural expressions unless the context clearly indicates otherwise. In this application, the terms "comprising" or "including" should not be construed as necessarily including all of the various components or various steps described in the specification, but rather should be construed as not including some of the components or some of the steps, or as further including additional components or steps.

Meanwhile, terms indicating directions such as upper, lower, left, right, front, and rear may be used in the present disclosure, but these terms are only for convenience of description, and it is obvious to those skilled in the art that the terms may vary depending on the position, arrangement, or rotation of a reference object, or the position of an observer.

For convenience of description, the direction along the length direction of the winding axis of the electrode assembly wound in the form of a jelly roll is referred to as the winding axis direction in this specification. And, the direction surrounding the winding axis is referred to as the circumferential direction. And, the direction closer to or away from the winding axis is referred to as the radial direction. Among these, the direction closer to the winding axis is particularly referred to as the centripetal direction, and the direction away from the winding axis is referred to as the centrifugal direction.

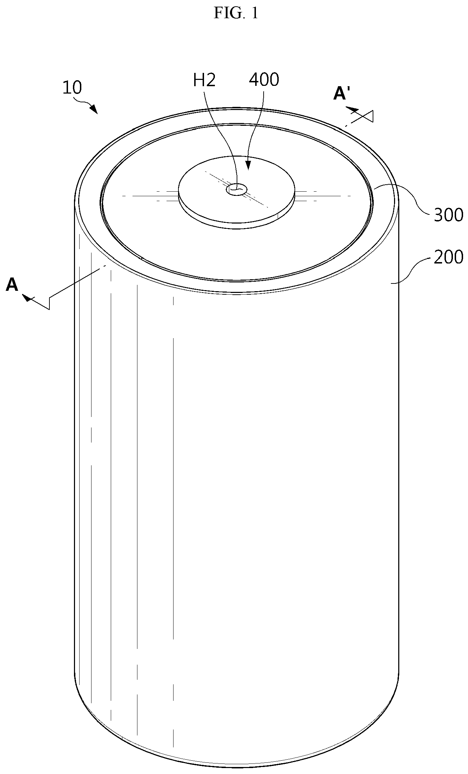

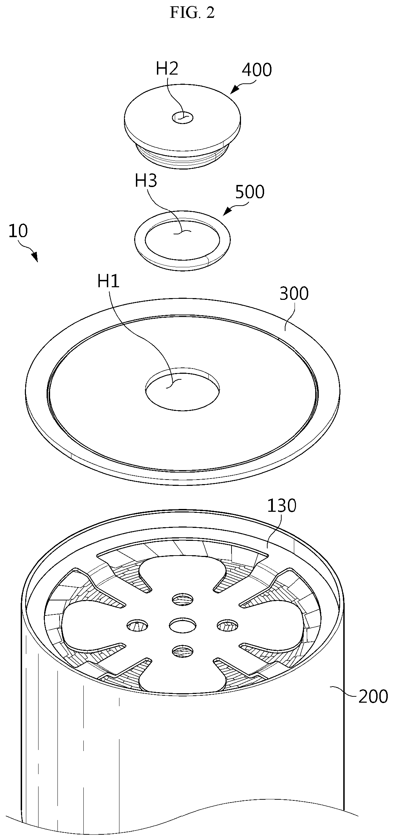

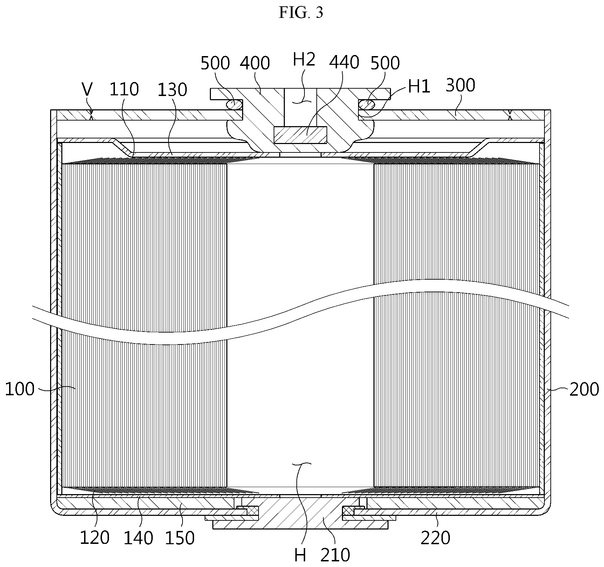

FIG. 1 is a perspective view showing the appearance of a battery cell 10 according to an embodiment of the present disclosure. FIG. 2 is an exploded perspective view of FIG. 1 according to an embodiment of the present disclosure. FIG. 3 is a cross-sectional view of the battery cell 10 of FIG. 1 taken along line A-A' according to an embodiment of the present disclosure.

Referring to FIGS. 1 to 3, the battery cell 10 according to an embodiment of the present disclosure may include an electrode assembly 100, a battery housing 200, a cap 300, an injection plug 400, and a gasket 500.

Referring to FIG. 3, the electrode assembly 100 may include a first uncoated portion 110 and a second uncoated portion 120. More specifically, the electrode assembly 100 may be in the form of a jelly-roll in which the first electrode and the second electrode are wound around a winding axis with a separator interposed therebetween. Here, the first electrode and the second electrode may be formed in a sheet shape. An additional separator for insulation from the battery housing 200 may be provided on the outer circumferential surface of the electrode assembly 100. The structure of the electrode assembly 100 is not limited by the embodiment, and may have a winding structure well known in the art.

The first electrode may be a negative electrode plate, and the second electrode may be a positive electrode plate. A negative electrode active material may be applied onto one or both surfaces of the negative electrode plate, and the first uncoated portion 110 where the negative electrode active material is not applied may be formed at an end of the negative electrode plate. The first uncoated portion 110 may be exposed to the outside of the separator while forming a plurality of winding turns around the center of the electrode assembly 100 and may itself be used as an electrode tab. A positive electrode active material may be applied onto one or both surfaces of the positive electrode plate, and the second uncoated portion 120 where the positive electrode active material is not applied may be formed at an end of the positive electrode plate. The second uncoated portion 120 may be exposed to the outside of the separator while forming a plurality of winding turns around the center of the electrode assembly 100 and may itself be used as an electrode tab. That is, the positive electrode plate and the negative electrode plate may each include uncoated portions that are not coated with an active material at the long side ends in the winding direction. And, the first uncoated portion 110 and the second uncoated portion 120 may be configured to face opposite directions to each other. The first uncoated portion 110 may be accommodated inside the battery housing 200 to be positioned at one end in the winding axis direction, and the second uncoated portion 120 may be accommodated inside the battery housing 200 to be positioned at the other end in the winding axis direction. Here, the positive electrode active material coated on the positive electrode plate and the negative electrode active material coated on the negative electrode plate may be used without limitation as long as they are active materials known in the art.

And, the separator may be a porous polymer film, for example, a porous polymer film made of a polyolefin-based polymer such as ethylene homopolymer, propylene homopolymer, ethylene/butene copolymer, ethylene/hexene copolymer, and ethylene/ methacrylate copolymer, either alone or in a stacked structure thereof. As another example, the separator may be a conventional porous nonwoven fabric, for example, a nonwoven fabric made of high melting point glass fiber, polyethylene terephthalate fiber, and the like.

At least one surface of the separator may include a coating layer of inorganic particles. Additionally, the separator itself may be formed of a coating layer of inorganic particles. The particles constituting the coating layer may have a structure coupled to a binder so that an interstitial volume exists between adjacent particles.

For example, flag-shaped notching tabs may be formed in the first uncoated portion 110 and the second uncoated portion 120 by forming notches at predetermined intervals. In the jelly-roll type electrode assembly 100, the notching tabs may be bent radially and flattened. The notching tabs may be bent radially inward or outward. The notching tabs may be bent one by one during the process of winding the laminate to form the jelly-roll type electrode assembly 100. Alternatively, the notching tabs may be bent all at once after winding the laminate to form the jelly-roll type electrode assembly 100. The notching tabs of the first uncoated portion 110 and the notching tabs of the second uncoated portion 120 that are bent radially and overlapped in this way may provide a plane substantially perpendicular to the axial direction at both ends of the electrode assembly 100 in the axial direction.

Referring to FIGS. 1 to 3, the battery housing 200 may be configured to accommodate the electrode assembly 100. The battery housing 200 may have an open end formed on one side. The battery housing 200 may be a roughly cylindrical container having an open end formed on one side. For example, the electrode assembly 100 may be accommodated inside the battery housing 200 so that the first uncoated portion 110 faces the open end. Specifically, the battery housing 200 may include a side wall portion, a bottom portion connected to one axial end of the side wall portion, and an open end provided at the other axial end of the side wall portion. The side wall portion and the bottom portion of the battery housing 200 may be formed integrally. The bottom portion has a roughly flat shape. The side wall portion may be cylindrical, connected to the bottom portion, and extend in the axial direction. The side of the side wall that is not connected to the bottom portion may be defined as the open end of the battery housing 200. FIGS. 1 to 3 illustrates that the bottom portion is included at the lower end of the battery housing 200 and the open end is included at the upper end of the battery housing 200. The open end may be formed at a portion facing the bottom portion of the battery housing 200. Therefore, the electrode assembly 100 may be accommodated through the open end formed in the battery housing 200.

The side wall portion of the battery housing 200 may be configured to have a cylindrical shape with a constant radius. Preferably, the entire region of the side wall portion of the battery housing 200 may be configured to have a cylindrical shape with a constant radius.

According to an embodiment, the bottom portion forms a closed surface of the battery housing 200, a through hole is formed at the bottom portion, and the electrode terminal 210 may pass through the through hole.

Conventional battery housings 200 sometimes further include a beading portion formed at an end adjacent to the open end and a crimping portion formed on the beading portion, but the battery housing 200 of the present disclosure may not have a beading and crimping structure formed on the sidewall portion. That is, in the battery housing 200 of the present disclosure, the side wall portion may not be recessed inward. That is, the battery housing 200 of the present disclosure may be configured to have a constant radius across the entire region of the side wall portion.

According to this structure, by excluding the beading and crimping structure in the cylindrical battery cell 10, it is possible to prevent the occurrence of various process errors that may be caused by the beading and crimping structure. Additionally, process simplification may be achieved by omitting processes such as beading and crimping. Furthermore, it is possible to prevent a phenomenon in which the formation of the beading and crimping structure increases dead space within the battery in the winding axis direction of the electrode assembly 100 and lowers energy density. Therefore, the battery cell 10 according to the present disclosure may have a larger internal capacity for the same external shape compared to a battery cell using the beading and crimping method. That is, according to the structure of the present disclosure, the energy density of the battery cell 10 may be increased.

The battery housing 200 may include a conductive metal material. The material of the battery housing 200 may include a conductive metal, for example, aluminum, steel, stainless steel, or the like. For example, the bottom portion and the side wall portion may be manufactured by forming a metal sheet plated with nickel on the surface of steel using a deep drawing process, and then trimming the front end of the side wall portion with a punch while gripping it with a blank holder. However, the material and manufacturing method of the battery housing 200 are not limited thereto.

The battery housing 200 may be electrically connected to the first uncoated portion 110 of the electrode assembly 100. Accordingly, the battery housing 200 may have a first polarity.

Referring to FIGS. 1 to 3, the cap 300 may be configured to cover an open end formed on one side of the battery housing 200. The cap 300 may be configured to have, for example, a roughly plate shape. The cap 300 may be coupled to the open end of the battery housing 200. For example, the cap 300 may be seated on the upper edge of the open end of the battery housing 200. Alternatively, for example, as shown in FIG. 3, the cap 300 may contact the inner surface of the upper edge of the open end of the battery housing 200.

The open end of the battery housing 200 and the contact point of the cap 300 may be coupled. For example, the coupling point between the open end of the battery housing 200 and the cap 300 may be coupled by welding. For example, the cap 300 may be coupled to the battery housing 200 using butt welding. Therefore, the battery cell 10 may have a larger internal capacity for the same external shape compared to a battery cell using the beading and crimping method. Therefore, the energy density of the battery cell 10 may be increased. However, it is obvious that the battery housing 200 and the cap 300 may be coupled by a coupling method other than welding, and the coupling method is not limited thereto. By coupling the battery housing 200 and the cap 300, airtightness of the battery cell 10 may be ensured.

The cap 300 may be made of a metal material. Therefore, the cap 300 may have conductivity. For example, the cap 300 may include an aluminum material. The cap 300 may be electrically connected to the battery housing 200. Meanwhile, since the battery housing 200 is also made of a conductive metal, the cap 300 coupled to the battery housing 200 may be configured to have the same polarity as the battery housing 200. For example, the cap 300 may be configured to have a first polarity.

The thickness of the cap 300 may be approximately 0.5 mm or more and 2 mm or less. For example, the thickness of the cap 300 may be approximately 1 mm.

The cap 300 may have an injection port H1 formed in at least a partial region thereof. The injection port H1 may be formed in the center of the cap 300. At this time, the injection port H1 may be blocked by an injection plug 400 to be described later. For example, the injection plug 400 may be press-fitted into the injection port H1. As the injection port H1 is blocked by the injection plug 400, airtightness of the battery cell 10 may be ensured.

The injection port H1 may, for example, serve as an electrolyte injection port. The center of the injection port H1 may coincide with the center of the winding center hole H of the electrode assembly 100. That is, the injection port H1 of the cap 300 may be positioned above the winding center hole H of the electrode assembly 100 in the winding axis direction.

The diameter of the injection port H1 may be formed to be smaller than the diameter of the winding center hole H of the electrode assembly 100. For example, the diameter of the injection port H1 may be approximately 3 mm or more and 4 mm or less. According to this structure, the injection plug 400 moves downward during the process of being press-fitted into the injection port H1, and at this time, the electrode assembly 100 or the first current collector plate 130 coupled to the electrode assembly 100 may be prevented from being damaged, by the injection plug 400 moved downward. That is, even if the injection plug 400 is press-fitted downward, the injection plug 400 enters into the winding center hole H of the electrode assembly 100, which may not affect the bent surface or electrode tab of the electrode assembly 100.

Meanwhile, the injection port H1 may be configured to discharge gas generated during the pre-charge process to be described later. That is, after a degassing process in which all gases generated during the pre-charge process are discharged through the injection port H1, the injection plug 400 may be configured to be coupled onto the injection port H1. Accordingly, the swelling phenomenon of the battery cell 10 may be reduced.

Referring to FIG. 3, the cap 300 may include a vent portion V. Since the vent portion V is provided in the cap 300 and does not occupy a separate space, energy density may be further secured. The vent portion V may be ruptured when the pressure inside the battery housing 200 exceeds a threshold. The vent portion V may be formed on one or both surfaces of the cap 300. The vent portion V may form a continuous or discontinuous circular pattern, a linear pattern, or any other pattern on the surface of the cap 300. For example, the vent portion V may be formed in a roughly circular ring shape having a certain width. This circular ring-shaped vent portion V may have the same center as the center of the cap 300. For example, the vent portion V may be implemented as a thin-walled portion in which both surfaces of the cap 300 are notched.

Referring to FIGS. 1 to 3, the injection plug 400 may be configured to seal the injection port H1. That is, the injection plug 400 may be configured to be inserted into the injection port H1. The injection plug 400 may pass through the injection port H1. As the injection plug 400 is inserted into the injection port H1 of the cap 300, airtightness of the battery cell 10 may be secured. The injection plug 400 may pass through the injection port H1 formed in the cap 300, thereby sealing the exterior and interior of the battery housing 200 and preventing electrolyte leakage.

This structure may achieve process simplification by omitting the beading and crimping process. Furthermore, it is possible to prevent a phenomenon in which the beading and crimping structure increases dead space within the battery in the winding axis direction of the electrode assembly 100 and thus lowers energy density. That is, according to the structure of the present disclosure, the energy density of the battery cell 10 may be increased.

The injection plug 400 may be configured with a blind rivet. Here, that is, the injection plug 400 may be coupled to the cap 300 using the riveting method of a blind rivet. The injection plug 400 may be riveted to the cap 300 and fixed.

Conventionally, a ball was press-fitted and welded to seal the injection port H1. When welding the ball and the cap 300, since it is not a typical butt welding, micro cracks may be easily formed between the ball and the cap 300. Additionally, when such cracks are formed, the battery cell may be determined as defective due to an issue of voltage drop during the battery utilization process. Additionally, considering the thickness of the cap 300, the press-fit force of the ball is limited, which may easily lead to electrolyte leakage.

The injection plug 400 configured with a blind rivet may have high durability or rigidity. The injection plug 400 configured with a blind rivet may not be broken even if internal pressure rises due to a short circuit occurring inside the battery housing 200. As a result of testing the vent pressure under the condition of 25 bar, the vent portion V of the cap 300 was broken, but it was confirmed that the injection plug 400 configured with a blind rivet remained undamaged, and thus the injection plug 400 was strong against the vent pressure.

According to the embodiment of the present disclosure, the injection plug 400 is configured with a blind rivet, thereby enhancing sealing force and preventing electrolyte leakage. Additionally, by sealing with a mechanical fastening such as riveting, the sealing step may be performed repeatedly, thereby enhancing the repeatability and reproducibility of the sealing step.

The battery cell 10 may further include a first current collector plate 130 configured to be electrically connected to the first electrode and a second current collector plate 140 configured to be electrically connected to the second electrode. The first current collector plate 130 and the second current collector plate 140 may each be bonded to substantially flat surfaces formed by bending the notching tabs exposed to both ends of the electrode assembly 100 in the winding axis direction. A method such as resistance welding, ultrasonic welding, or laser welding may be used for welding.

The battery housing 200 may be electrically connected to the first current collector plate 130. The electrode terminal 210 may be electrically connected to the second current collector plate 140. Accordingly, the battery housing 200 may have a first polarity, and the electrode terminal 210 may have a second polarity. That is, the electrode terminal 210 may mean an electrode terminal 210 having the second polarity. In particular, the bottom portion of the battery housing 200, the side wall portion connected thereto, and the cap 300 may all have the first polarity. Accordingly, both the first polarity and the second polarity may be formed on the bottom portion of the battery housing 200. Then, the battery housing 200 may have both a busbar connected to the electrode terminal 220 having the first polarity and a busbar connected to the electrode terminal 210 having the second polarity positioned at one end of the battery housing 200 in the winding axis direction. In one example, the electrode terminal 220 having the first polarity may be a negative electrode terminal, and the electrode terminal 210 having the second polarity may be a positive electrode terminal. Of course, the opposite may also be true. Therefore, the battery cell 10 according to the present disclosure may simplify the electrical connection structure by connecting both the positive electrode and the negative electrode in one direction when electrically connecting a plurality of battery cells 10. Additionally, since the battery cell 10 according to the present disclosure has a structure in which most of the bottom portion of the battery housing 200 may be used as the electrode terminal 220 having the first polarity, it has the advantage of securing a sufficient area for welding components for electrical connection.

The battery cell 10 may further include an insulator 150. The insulator 150 may be provided between the second current collector plate 140 and the inner circumferential surface of the bottom portion. The insulator 150 prevents contact between the second current collector plate 140 and the battery housing 200. The insulator 150 may be interposed between the inner circumferential surface of the side wall portion and the electrode assembly 100. That is, the insulator 150 may be interposed between the second uncoated portion 120 and the battery housing 200. This is to prevent contact between the second uncoated portion 120 extending toward the bottom portion of the battery housing 200 and the inner circumferential surface of the battery housing 200.

Preferably, the battery cell 10 may be a cylindrical secondary battery having, for example, a form factor ratio (ratio of diameter to height) greater than approximately 0.4. Preferably, the diameter of the battery cell 10 may be 40 mm to 50 mm, and the height may be 60 mm to 130 mm. The form factor of the battery cell 10 may be, for example, 46110, 4875, 48110, 4880, or 4680.

However, the shape of the battery cell 10 according to the present disclosure is not limited by the above, and may be applied to other types of batteries. For example, it may also be applicable to a prismatic battery.

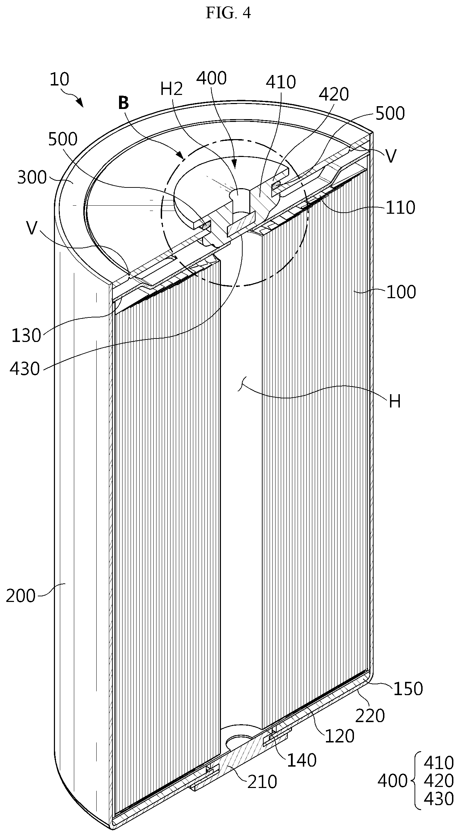

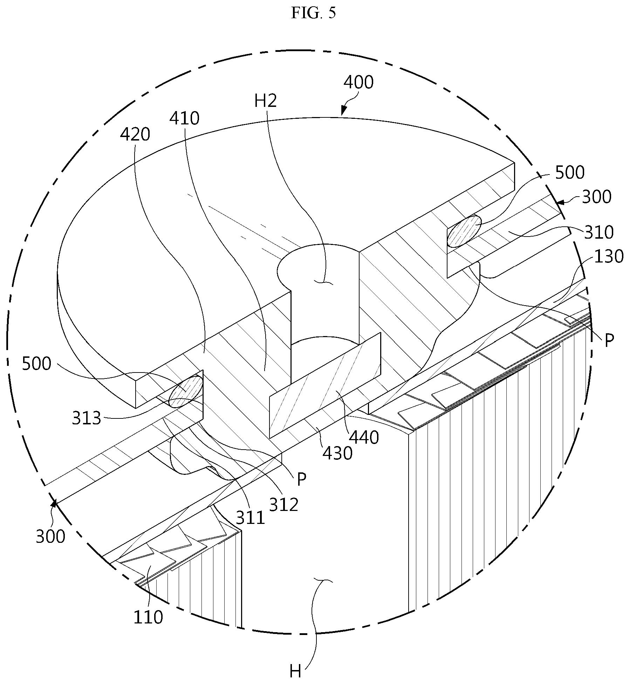

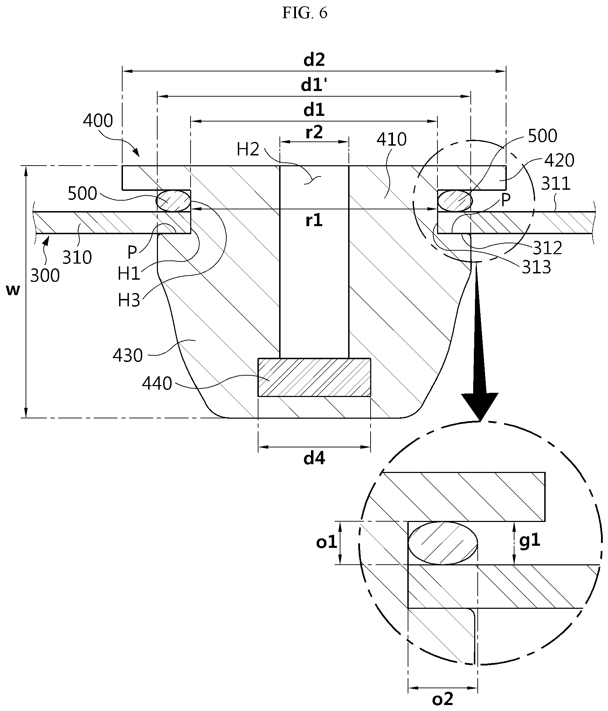

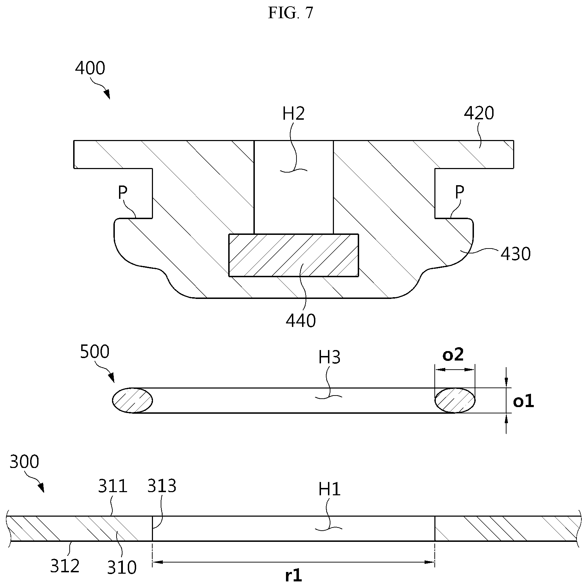

FIG. 4 is a view of the battery cell of FIG. 1 taken along line A-A'. FIG. 5 is an enlarged view of portion B of FIG. 4. FIG. 6 is a cross-sectional view of a cap, an injection plug, and a gasket according to an embodiment of the present disclosure. FIG. 7 is a cross-sectional view showing a cap, an injection plug, and a gasket separated from each other according to an embodiment of the present disclosure.

The injection plug 400 may be configured to surround the injection port periphery 310 of the cap 300 on at least three surfaces thereof. The injection plug 400 may surround the upper surface 311, lower surface 312, and inner surface 313 of the injection port periphery 310 of the cap 300. Accordingly, airtightness may be improved.

A portion of the injection plug 400 may be inserted into the battery housing 200, and the other portion may be exposed to the outside of the battery housing 200. A portion of the injection plug 400 may be positioned above the cap 300 with respect to the winding axis direction, and the other portion may be positioned below the cap 300.

The injection plug 400 may include a body portion 410 inserted into the injection port H1, a flange portion 420 extending outward in a radial direction perpendicular to the winding axis from the upper end of the body portion 410, and a plastic deformation portion 430 at least partially extending outward in the radial direction from the lower end of the body portion 410.

The body portion 410 may be a portion extending axially to pass through the injection port H1. The body portion 410 may pass through the battery housing 200. At least a portion of the body portion 410 may be positioned inside the battery housing 200. The side surface of the body portion 410 may be surrounded by the injection port periphery 310 of the cap 300. The body portion 410 may have a cylindrical shape. Referring to FIG. 6, the diameter (d1) of the body portion 410 may be substantially similar to or smaller than the inner diameter (r1) of the injection port H1. The diameter (d1) of the body portion 410 may be substantially the same as the inner diameter (r1) of the injection port H1.

The flange portion 420 may cover the injection port H1 on the upper side of the cap 300. The flange portion 420 may be positioned outside the battery housing 200. The diameter (d2) of the flange portion 420 may be greater than the diameter (d1) of the body portion 410. The diameter (d2) of the flange portion 420 may be greater than the inner diameter (r1) of the injection port H1. According to the above embodiment of the present disclosure, even under external pressure, the injection plug 400 does not fall into the winding center hole H of the electrode assembly 100, may be fixed in position, and may easily seal the injection port H1.

According to an embodiment, the thickness of the flange portion 420 may be constant in the radial direction. For example, the flange portion 420 may include a flat surface. According to another embodiment, although not illustrated in the drawing, the flange portion 420 may be formed such that the thickness thereof increases toward the inside in the radial direction. For example, a cross-section of the flange portion 420 taken along the winding axis direction with respect to the winding axis may have a hemispherical shape. However, the shape of the flange portion 420 is not limited by the above embodiment, and may be variously designed and modified.

The plastic deformation portion 430 may be a portion whose shape is deformed by external pressure (tension) applied through riveting. The plastic deformation portion 430 may be formed by plastic working a portion protruding toward the inside of the cap 300. According to an embodiment, the thickness of the plastic deformation portion 430 may be constant in the radial direction. The side surface of the plastic deformation portion 430 may have an irregular shape. For example, the plastic deformation portion 430 may include a curved surface formed in the vertical direction. That is, the side surface of the plastic deformation portion 430 of the present disclosure may be configured to have a radius that is not constant throughout the entire region.

The maximum diameter (d1') of the plastic deformation portion 430 may be greater than the inner diameter (r1) of the injection port H1. According to the above embodiment of the present disclosure, since the diameters of both the flange portion 420 positioned above the cap 300 and the plastic deformation portion 430 positioned below the cap 300 are greater than the inner diameter (r1) of the injection port H1, the injection plug 400 may be fixed in position without moving upward and downward. Therefore, the injection port H1 may be strongly sealed, thereby sealing the interior and exterior of the battery housing 200 and preventing electrolyte leakage.

According to an embodiment, at least a portion of the plastic deformation portion 430 may include a horizontal plane P substantially parallel to the lower surface of the cap 300. The horizontal plane P may be a portion extending in a radial direction perpendicular to the lower end of the body portion 410. The horizontal plane P may face the lower surface 312 of the cap 300. According to the above embodiment of the present disclosure, the horizontal plane P of the plastic deformation portion 430 is configured to face the cap 300, so that the cap 300 may be in closer contact with the plastic deformation portion 430 of the injection plug 400. Therefore, airtightness of the injection plug 400 may be increased.

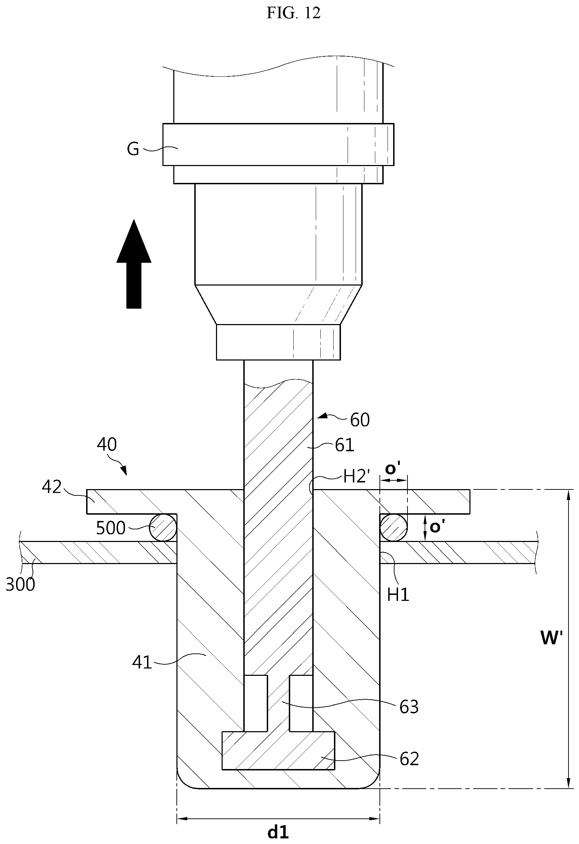

A mandrel hole H2 extending in the winding axis direction from the upper surface of the injection plug 400 may be formed in the injection plug 400. The mandrel hole H2 may be formed to pass through the center of the injection plug 400. The mandrel hole H2 may pass through the center of the body portion 410 and the flange portion 420 of the injection plug 400. A portion of the mandrel hole H2 may be positioned at least in the upper portion of the plastic deformation portion 430 of the injection plug 400. The mandrel hole H2 may be a hole where a mandrel 60 (see FIG. 12) to be described later is inserted or detached. The inner diameter (r2) of the mandrel hole H2 may be greater than the diameter of the mandrel 60. The upper portion of the mandrel hole H2 may be open, and the lower end of the mandrel hole H2 may be closed. The mandrel hole H2 may be closed in the plastic deformation portion 430 or the body portion 410. A mandrel piece 440 to be described later may be positioned below the mandrel hole H2.

The injection plug 400 may further include a mandrel piece 440 disposed inside the injection plug 400. The mandrel piece 440 may be a portion of the mandrel 60 inserted into the injection plug preform 40 (see FIG. 12) in a state before the injection plug 400 is plastically deformed and fixed to the cap 300. The mandrel piece 440 may have substantially the same configuration as the mandrel head portion 62 (see FIG. 12) of the mandrel 60. During the process of riveting the injection plug preform 40, the mandrel 60 may be connected to the riveting gun G (see FIG. 12) to be pulled upward. At this time, if a force exceeding a certain level is applied, the mandrel head portion 62 and the mandrel pin portion 61 (see FIG. 12) constituting the mandrel 60 may be separated. The mandrel head portion 62 separated and embedded within the injection plug 400 may be defined as the mandrel piece 440.

Referring to FIG. 6, the diameter (d4) of the mandrel piece 440 may be greater than the inner diameter (r2) of the mandrel hole H2. That is, the mandrel piece 440 may protrude radially further outward than the inner surface of the injection plug 400 surrounding the mandrel hole H2. According to the above embodiment of the present disclosure, if the force pulling the mandrel head portion 62 upward exceeds the yield point of material of the injection plug 400, at least a portion of the injection plug preform 40 may be plastically deformed.

The injection plug 400 may include aluminum. Since the injection plug 400 may be corroded by the electrolyte, it may include a corrosion resistant material. The injection plug 400 may include a material having elongation. According to the above embodiment of the present disclosure, when a predetermined force or more is applied to the injection plug preform 40, the shape thereof may be deformed. Therefore, at least a portion of the injection plug preform 40 may be plastically deformed to seal the injection port H1.

The process of sealing the injection port H1 through the injection plug 400 will be described later.

Referring to FIGS. 4 to 6, the gasket 500 may be interposed between the injection plug 400 and the cap 300. Specifically, the gasket 500 may be disposed between the upper surface 311 of the cap 300 and the lower surface of the flange portion 420 of the injection plug 400. That is, the injection plug 400 may be riveted to the cap 300 with the gasket 500 interposed therebetween. For example, the gasket 500 may be disposed parallel to the lower surface of the flange portion 420 and the upper surface 311 of the cap 300.

The gasket 500 is interposed between the injection plug 400 and the cap 300, thereby sealing the interior and exterior of the battery housing 200 to prevent electrolyte leakage and electrically insulating the injection plug 400 from the cap 300. The gasket 500 may be in close contact with the injection plug 400 and the cap 300 therebetween.

The gasket 500 may have a ring shape surrounding at least one surface of the injection port periphery 310. The gasket 500 may be in the form of a washer. According to an embodiment, the gasket 500 may be configured to contact the upper surface of the injection port periphery 310 of the cap 300 in the circumferential direction. Referring to FIG. 7, a gasket hole H3 may be formed at the center of the gasket 500. The injection plug 400 may be disposed to pass through the gasket hole H3. Therefore, it may be easy to seal the injection port H1 in the circumferential direction. Here, the gasket 500 may refer to an O-ring. According to the above embodiment of the present disclosure, the gasket 500 may be disposed outside the battery housing 200, thereby making it difficult to contact the internal electrolyte, and therefore, it may be advantageous in terms of the chemical resistance of the gasket 500.

According to another embodiment, although not illustrated in the drawing, at least a portion of the gasket 500 may be inserted into the injection port H1.

According to an embodiment, the gasket 500 may have a circular cross-section cut in the winding axis direction centered on the winding axis. The gasket 500 may be in a state of being compressed in the winding axis direction by riveting of the injection plug 400. For example, the gasket 500 may have an elliptical cross-section cut in the winding axis direction centered on the winding axis. For example, the radial diameter (o2) of the cross-section of the gasket 500 cut in the winding axis direction may be greater than the diameter (o1) in the winding axis direction. At this time, the diameter (o1) of the cross-section of the gasket 500 cut in the winding axis direction may be substantially equal to the vertical distance (g1) between the flange portion 420 and the cap 300.

The gasket 500 provided within a secondary battery may require electrical insulation, elasticity, high heat resistance to maintain airtightness under the high temperature and high humidity conditions typically found inside the battery, durable mechanical properties, and chemical resistance to the electrolyte.

The gasket 500 may have chemical resistance to the electrolyte. The gasket 500 with high chemical resistance to the electrolyte may have little damage and maintain the stability of the battery cell 10 even if the electrolyte leaks. The gasket 500 may have heat resistance and electrical insulation. The gasket 500 has excellent chemical resistance, so that it is highly resistant to corrosion, and the gasket 500 has excellent heat resistance, so that its physical properties may not change significantly even when exposed to high temperature.

For example, the gasket 500 may include a thermoplastic plastic. For example, the gasket 500 may include at least one of polyurethane (PU), polyethylene (PE), polycarbonate (PC), polyethylene terephthalate (PET), polypropylene (PP), polyamide (PA), polyvinyl chloride (PVC), polybutylene terephthalate (hereinafter referred to as 'PBT'), polytetrafluoroethylene (PTFE), and perfluoroalkoxy (PFA).

For example, the gasket 500 may include at least one of PBT, PTFE, and PFA having excellent chemical resistance, heat resistance, and insulation. The gasket 500 has excellent chemical resistance, so that it is highly resistant to corrosion, and the gasket 500 has excellent heat resistance, so that its physical properties may not change significantly even when exposed to high temperature.

According to an embodiment, the gasket 500 may include a PBT material. The PBT material has excellent chemical resistance to the electrolyte, so that it is highly resistant to corrosion, and the PBT material has excellent heat resistance and a high heat deflection temperature, so that its physical properties may not change significantly even when exposed to high temperature. Additionally, the PBT material has low water absorption rate, so that its physical properties may remain unchanged even when exposed to moisture. Additionally, the PBT material has high tensile strength, so that it may main mechanical strength even when subjected to external impact or electrolyte. Therefore, the gasket 500 including the PBT material does not corrode for a long time, and thus may be advantageous in terms of battery stability. That is, the gasket 500 including the PBT material may be more suitable for electric vehicle batteries used for approximately 10 years or more. Additionally, the gasket 500 including the PBT material is more cost-effective compared to other materials having chemical resistance, and may be easily mass-produced and manufactured.

The gasket 500 may have a heat deflection temperature (HDT) of 130 degrees or higher and 170 degrees or lower under a load of 66 psi. The heat deflection temperature may refer to a characteristic indicating a critical point at which physical deformation begins depending on temperature. Since electrolytes are mostly used at high temperatures, the higher the heat deflection temperature (HDT) of the gasket 500, the more stable it may be. For example, the PBT gasket 500 may have a heat deflection temperature of 130 degrees or higher and 170 degrees or lower under a load of 66 psi. For example, the PBT gasket 500 may have a heat deflection temperature of 140 degrees or higher and 160 degrees or lower under a load of 66 psi. For example, the PBT gasket 500 may have a heat deflection temperature of 154 degrees under a load of 66 psi. For example, the PBT gasket 500 may have a heat deflection temperature of 40 degrees or higher and 70 degrees or lower under a load of 264 psi. For example, the PBT gasket 500 may have a heat deflection temperature of 50 degrees to 60 degrees at a load of 264 psi. For example, the PBT gasket 500 may have a heat deflection temperature of 54 degrees under a load of 264 psi. According to the battery cell 10 including the PBT gasket 500 of the present disclosure, it may withstand high temperatures well without deformation, thereby maintaining stable performance even under high temperatures and various load conditions. In the present disclosure, the heat deflection temperature required for the gasket is in accordance with the standards of the American Society for Testing and Materials (ASTM).

The gasket 500 may have a water absorption rate of approximately 0.05% or higher and 0.15% or lower. Since the electrolyte may contain moisture, the water absorption rate of the gasket 500 may be an important characteristic for evaluating the chemical resistance of the gasket 500. That is, the lower the water absorption rate of the gasket 500, the higher the chemical resistance of the gasket 500. For example, the PBT gasket 500 may have a water absorption rate of approximately 0.05% or higher and 0.15% or lower. For example, the PBT gasket 500 may have a water absorption rate of approximately 0.07% or higher and 0.12% or lower. For example, the PBT gasket 500 may have a water absorption rate of approximately 0.08%. According to the battery cell 10 including the PBT gasket 500 of the present disclosure, even when exposed to the electrolyte for a long time, it does not corrode and may maintain stable performance. In the present disclosure, the water absorption rate required for the gasket is in accordance with the standards of the American Society for Testing and Materials (ASTM).

The gasket 500 may have a tensile strength of approximately 50 MPa or more and 70 MPa or less. For example, the PBT gasket 500 may have a tensile strength of approximately 50 MPa or more and 70 MPa or less. For example, the PBT gasket 500 may have a tensile strength of approximately 55 MPa or more and 65 MPa or less. For example, the PBT gasket 500 may have a tensile strength of approximately 60 MPa. According to the battery cell 10 including the PBT gasket 500 of the present disclosure, it has a high tensile strength, and thus, when exposed to an electrolyte, it may maintain structural strength and exhibit strong resistance to external impact or the like, thereby maintaining stable performance against physical impact. In the present disclosure, the tensile strength required for the gasket is in accordance with the standards of the American Society for Testing and Materials (ASTM).

The gasket 500 may have an elongation of approximately 40% or more. For example, the elongation of the PBT gasket 500 may be approximately 40% or more and 150% or less. According to the above embodiment of the present disclosure, when the elongation satisfies the condition in the above range, the gasket 500 exhibits sufficient mechanical strength required for the gasket 500, thereby further improving battery stability against physical impact. In the present disclosure, the elongation required for the gasket is in accordance with the standards of the American Society for Testing and Materials (ASTM).

The gasket 500 may have a flexural modulus of approximately 300 MPa or more and 2500 MPa or less. The gasket 500 may have a flexural modulus of approximately 600 MPa or more and 2200 MPa or less. For example, the gasket 500 may have a flexural modulus of approximately 1800 MPa or more and 2200 MPa or less. The gasket 500 may have a flexural modulus of approximately 2000 MPa. According to the battery cell 10 including the PBT gasket 500 of the present disclosure, it has a relatively high flexural modulus, and thus maintains airtightness within the battery cell 10 and provides a cushioning effect against volume changes in the electrode assembly 100, thereby further enhancing battery stability against physical impact. In the present disclosure, the flexural modulus required for the gasket is in accordance with the standards of the American Society for Testing and Materials (ASTM).

As a result of the He leak test under conditions of 70 degrees and 5 bar by applying the PBT gasket 500, the He leakage rate was measured to be 1.3×10⁻⁶ cc/sec, confirming excellent sealing force that easily passed the He leak test criteria.

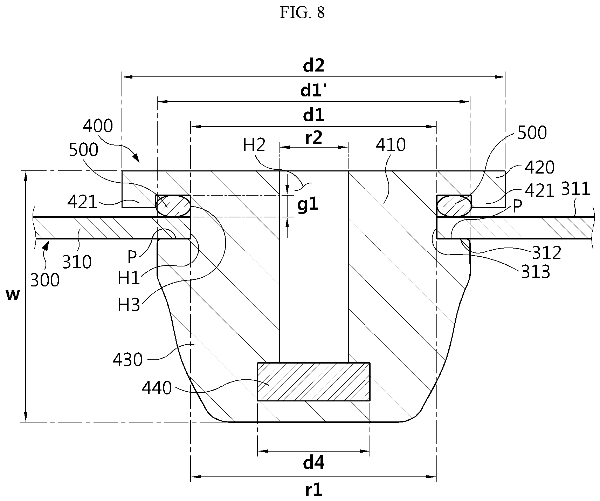

FIG. 8 is a cross-sectional view of a cap, an injection plug, and a gasket according to another embodiment of the present disclosure.

The flange portion 420 of the injection plug 400 may include a protrusion 421 protruding downward in the winding axis direction. The protrusion 421 may be formed at an edge portion of the flange portion 420. The protrusion length of the protrusion 421 may be substantially equal to or less than the vertical distance (g1) between the lower surface of the flange portion 420 and the upper surface 311 of the cap 300. The protrusion length of the protrusion 421 may be less than the vertical distance (g1) between the lower surface of the flange portion 420 and the upper surface 311 of the cap 300.

The gasket 500 may be disposed between the protrusion 421 of the flange portion 420 and the body portion 410. At least a portion of the gasket 500 may be surrounded by the protrusion 421 of the flange portion 420, the lower surface thereof, and the body portion 410.

According to the above embodiment of the present disclosure, the position of the gasket 500 may be easily fixed by the protrusion 421, and the gasket 500 may be prevented from moving horizontally due to compression or external pressure. Therefore, the injection port H1 may be sealed more reliably, and electrolyte leakage may be further prevented.

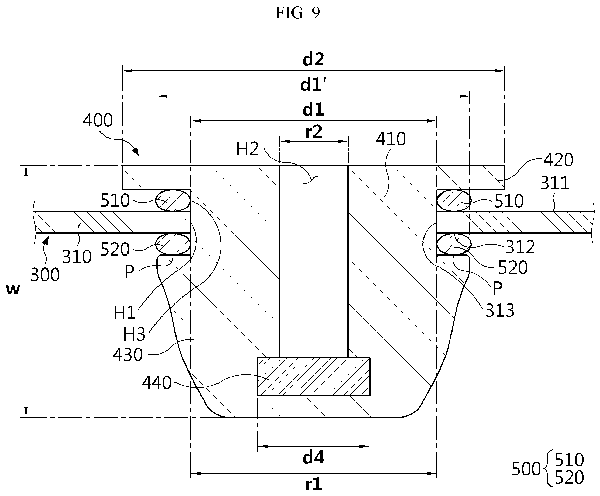

FIG. 9 is a cross-sectional view of a cap, an injection plug, and a gasket according to still another embodiment of the present disclosure.

According to an embodiment, a gasket (e.g., 520 in FIG. 9) positioned on the lower surface of the cap may be further included. That is, the gasket 500 may include a first gasket 510 positioned on the upper surface of the cap and a second gasket 520 positioned on the lower surface of the cap. The first gasket 510 may have substantially the same configuration and shape as those of the gasket 500 described with reference to FIGS. 1 to 7. The second gasket 520 may have a different position from the first gasket 510, but may have substantially the same structure and shape.

The first gasket 510 and the second gasket 520 may simultaneously seal the upper surface 311 and the lower surface 312 of the cap 300. That is, the first gasket 510 and the second gasket 520 simultaneously double seal the inside and outside of the battery housing 200, thereby effectively preventing electrolyte leakage.

The second gasket 520 has a higher risk of exposure to the electrolyte than the first gasket 510, but it uses a material with strong chemical resistance and oil resistance, thereby minimizing the risk of corrosion from the electrolyte.

According to the above embodiment of the present disclosure, providing the first gasket 510 and the second gasket 520 facilitates the assembly and coupling of the gasket 500 while enhancing the sealing force of the gasket 500. Additionally, the injection port H1 may be sealed more reliably, and electrolyte leakage may be further prevented.

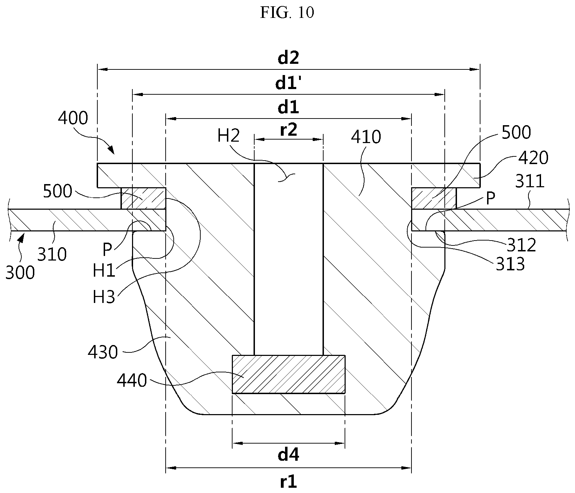

FIG. 10 is a cross-sectional view of a cap, an injection plug, and a gasket according to still another embodiment of the present disclosure.

The gasket 500 may have a rectangular cross-section cut in the winding axis direction centered on the winding axis. The gasket 500 may be in a state of being compressed in the winding axis direction by riveting of the injection plug 400. The inner surface of the gasket 500 may be in direct contact with the body portion 410 of the injection plug 400. The upper surface of the gasket 500 may be in direct contact with the flange portion 420 of the injection plug 400. The lower surface of the gasket 500 may be in direct contact with the upper surface 311 of the cap 300.

According to the above embodiment of the present disclosure, the gasket 500 completely seals the space between the cap 300 and the injection plug 400, thereby further improving airtightness.

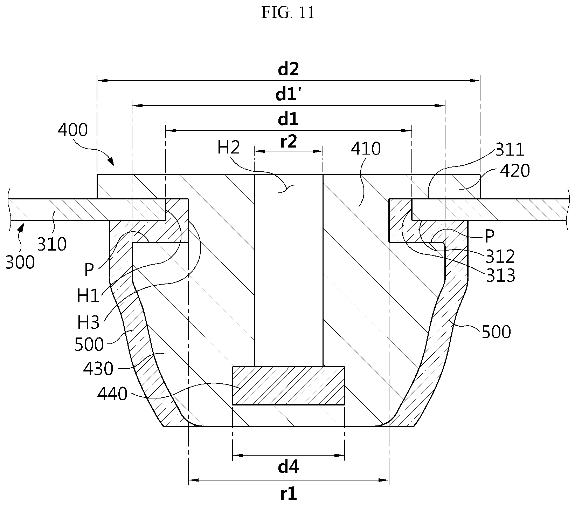

FIG. 11 is a cross-sectional view of a cap, an injection plug, and a gasket according to still another embodiment of the present disclosure.

The gasket 500 may surround the side surface of the injection plug 400. The gasket 500 may surround the side surfaces of the body portion 410 and the plastic deformation portion 430 of the injection plug 400. At least a portion of the gasket 500 may be positioned between the cap 300 and the injection plug 400, thereby sealing the space between the cap 300 and the injection plug 400. For example, at least a portion of the gasket 500 may be positioned between the inner surface 313 of the cap 300 and the body portion 410 of the injection plug 400. For example, at least a portion of the gasket 500 may be positioned between the lower surface 312 of the cap 300 and the plastic deformation portion 430 of the injection plug 400. For example, at least a portion of the gasket 500 may be positioned between the lower surface 312 of the cap 300 and the horizontal plane P of the plastic deformation portion 430 of the injection plug 400.

The gasket 500 may have a cylindrical structure in which both sides facing the winding axis direction are open. The gasket 500 may have a cylindrical structure with the upper surface and the lower surface open. The shape of the gasket 500 may be substantially the same as the shape of the side surfaces of the body portion 410 and the plastic deformation portion 430 of the injection plug 400.

The gasket 500 may include a curved surface, and at least a portion thereof may protrude in the radial direction. That is, the gasket 500 may have an irregular shape in which the radius thereof is not constant. The portion of the gasket 500 facing the plastic deformation portion 430 of the injection plug 400 may protrude radially outward.

According to the above embodiment of the present disclosure, the gasket 500 seals the space between the side surface of the injection plug 400 and the cap 300, thereby maximally blocking electrolyte exposure between the injection plug 400 and the cap 300, and preventing the electrolyte from adhering to the injection plug 400 and from being exposed between the cap 300 and the injection plug 400. Therefore, airtightness of the injection port H1 may be further improved.

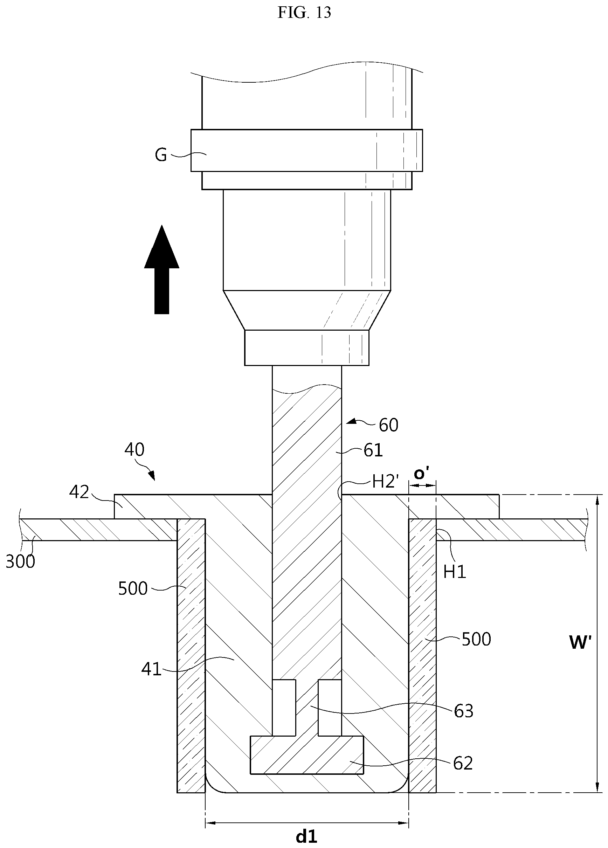

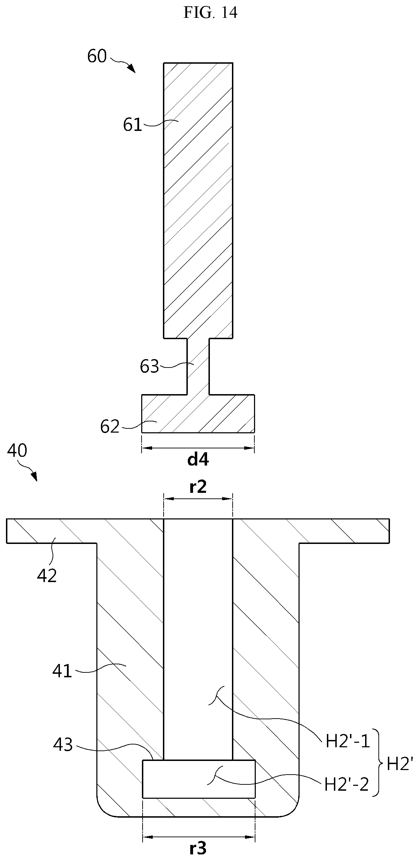

FIG. 12 is a view showing an injection plug preform and a gasket before riveting according to an embodiment of the present disclosure. FIG. 13 is a view showing an injection plug preform and a gasket before riveting according to the embodiment of FIG. 11 of the present disclosure. FIG. 14 is a cross-sectional view showing an injection plug preform and a gasket separated from each other before riveting according to an embodiment of the present disclosure.

Hereinafter, a method for manufacturing a battery cell 10 described with reference to FIGS. 1 to 11 will be described with reference to FIGS. 12 to 14.

A method for manufacturing a battery cell 10 may include a first step of inserting an electrode assembly 100 through an open end of a battery housing 200; a second step of covering the open end of the battery housing 200 with a cap 300; a third step of inserting an injection plug preform 40 into an injection port H1 formed in the cap 300; a fourth step of inserting a gasket 500 between the injection plug preform 40 and the cap 300; and a fifth step of connecting a riveting gun G to a mandrel 60 inserted into the injection plug preform 40 and pulling the riveting gun G upward to seal the injection port H1.

First, a battery housing 200 having an open end is prepared, and an electrode assembly 100 may be assembled to the battery housing 200 through the open end (first step).

Thereafter, the open end of the battery housing 200 may be covered with a cap 300 (second step). At this time, the open end of the battery housing 200 and the contact point of the cap 300 may be coupled. For example, the coupling point between the open end of the battery housing 200 and the cap 300 may be coupled by welding. For example, the cap 300 may be coupled to the battery housing 200 using butt welding. Therefore, the battery cell 10 may have a larger internal capacity for the same external shape compared to a battery cell using the beading and crimping method. Therefore, the energy density of the battery cell 10 may be increased. However, it is obvious that the battery housing 200 and the cap 300 may be coupled by a coupling method other than welding, and the coupling method is not limited thereto.

Thereafter, an injection plug preform 40 may be inserted into the injection port H1 formed in the cap 300, as shown in FIG. 12 (third step). The injection plug preform 40 may refer to a state before the injection plug 400 is riveted. The injection plug preform 40 may extend in the axial direction to pass through the injection port H1. A mandrel hole H2 extending in the axial direction may be formed in the injection plug preform 40.

Additionally, a step of inserting a gasket 500 between the injection plug preform 40 and the cap 300 may be performed (fourth step).

The third step and the fourth step may be performed by first inserting the gasket 500 and then inserting the injection plug preform 40, or by fitting the injection plug preform 40 onto the gasket 500 and then inserting it.

The injection plug preform 40 may include a body preform 41 and a flange preform 42. The body preform 41 has substantially the same configuration as the body portion 410 of the injection plug 400, and may have a shape before the injection plug 400 is riveted. Specifically, the body preform 41 may be a portion extending axially to pass through the injection port H1. The flange preform 42 may have substantially the same configuration and shape as the flange portion 420 of the injection plug 400.

The mandrel hole H2' may extend from the upper surface of the injection plug preform 40 in the winding axis direction. The mandrel hole H2' of the injection plug preform 40 has substantially the same configuration as the mandrel hole H2 of the injection plug 400, and may have a shape before the injection plug 400 is riveted. The mandrel hole H2' may be formed to pass through the center of the injection plug preform 40. The mandrel hole H2' may pass through the center of at least a portion of the flange preform 42 and the body preform 41 of the injection plug preform 40. The mandrel hole H2' may be a hole where a mandrel 60 is inserted or detached. The upper portion of the mandrel hole H2' may be open, and the lower end of the mandrel hole H2' may be closed. The mandrel hole H2' may be closed by the body preform 41.

Referring to FIG. 14, the mandrel hole H2' may be divided into a first region H2'-1 having an inner diameter of a first length (r2) and a second region H2'-2 having an inner diameter of a second length (r3) longer than the first length. That is, the second region H2'-2 may be concentric with the first region H2'-1 and have an inner diameter greater than or equal to the inner diameter of the first region H2'-1. The second region H2'-2 may be positioned below the first region H2'-1.

The mandrel 60 may be configured to be inserted into the mandrel hole H2'. The mandrel 60 may include a mandrel pin portion 61, a mandrel head portion 62 positioned at the lower end of the mandrel pin portion 61, and a vulnerable portion 63 positioned between the mandrel pin portion 61 and the mandrel head portion 62.

A portion of the mandrel pin portion 61 may protrude outward from the injection plug preform 40, and the other portion may be positioned within the mandrel hole H2' of the injection plug preform 40. A portion of the mandrel pin portion 61 may be positioned in the first region H2'-1 within the mandrel hole H2. The upper side of the mandrel pin portion 61 may be connected to the riveting gun G.

Referring to FIG. 14, the mandrel head portion 62 may be configured to extend radially further outward than the mandrel pin portion 61. The mandrel head portion 62 may be positioned in the second region H2'-2 within the mandrel hole H2'. The diameter (d4) of the mandrel head portion 62 may be longer than the first length (r2) and shorter than the second length (r3). Therefore, when the mandrel 60 is pulled upward, the mandrel head portion 62 may be caught on the protruding surface 43 of the injection plug preform 40 surrounding the first region H2'-1. At this time, if a force (tension) applied to pull the mandrel 60 upward exceeds the yield point of the material of the injection plug preform 40, at least a portion of the injection plug preform 40 may be plastically deformed.

The vulnerable portion 63 may be a portion that is relatively vulnerable compared to the mandrel pin portion 61 and the mandrel head portion 62 when a certain force is applied. For example, the vulnerable portion 63 may have a smaller diameter than the mandrel pin portion 61. That is, the vulnerable portion 63 may be a recessed portion recessed further inward than the mandrel pin portion 61 in the winding axis direction.

When the mandrel 60 is pulled upward, the mandrel pin portion 61 and the mandrel head portion 62 may be separated from the vulnerable portion 63 when a certain force or more is applied. After at least a portion of the injection plug preform 40 is plastically deformed, when a certain force or more is applied to the mandrel 60, the mandrel 60 may be broken into at the vulnerable portion 63. That is, the mandrel head portion 62 and the mandrel pin portion 61 may be separated. In this case, the mandrel head portion 62 is embedded within the injection plug preform 40, and the mandrel pin portion 61 may be removed to the outside of the mandrel hole H2.

The mandrel 60 may include a rigid metal material. For example, the mandrel 60 may include aluminum (Al), iron (Fe), stainless steel (SUS), or the like. For example, the mandrel 60 may include iron.

Thereafter, a step (fifth step) of connecting a riveting gun G to the mandrel 60 inserted into the injection plug preform 40 and pulling the riveting gun G upward to seal the injection port H1 may be performed.

When the riveting gun G connected to the mandrel 60 is pulled upward, the injection plug preform 40 may be plastically deformed by the tension. Specifically, the axial length W' of the injection plug preform 40 may be reduced (referring to FIGS. 6 and 12, it may be reduced from W' to W). Additionally, the maximum diameter (d1) of the body preform 41 of the injection plug preform 40 may extend to be longer than the inner diameter of the injection port H1 (referring to FIGS. 6 and 12, it may extend from d1 to d1').

The body preform 41 of the injection plug preform 40 may correspond to the body portion 410 and the plastic deformation portion 430 of the injection plug 400. In other words, the portion of the body preform 41 of the injection plug preform 40 that is plastically deformed by riveting may be defined as the plastic deformation portion 430.

When the riveting gun G connected to the mandrel 60 is pulled upward, the gasket 500 may be deformed by tension. The gasket 500 may be deformed in response to the plastic deformation of the injection plug preform 40. That is, the gasket 500 may also be deformed by the force causing the injection plug preform 40 to be plastically deformed.

Specifically, when the riveting gun G connected to the mandrel 60 is pulled upward, the gasket 500 may be compressed in the winding axis direction. The length of the gasket 500 in the winding axis direction may be reduced. At the same time, the length of the gasket 500 in the radial direction may be expanded. According to the above embodiment of the present direction, the gasket 500 is compressed by riveting pressure (e.g., tension), thereby preventing leakage of internal gas or electrolyte from the battery housing 200.

Referring to FIG. 12, a cross-section of the gasket 500 cut in the winding axis direction centered on the winding axis before being compressed may have a circular shape. For example, the diameter of the cross-section of the gasket 500 cut in the winding axis direction may be reduced (referring to FIGS. 12 and 6, it may be reduced from o' to o1). For example, the radial diameter of the cross-section of the gasket 500 cut in the winding axis direction may be expanded (referring to FIGS. 12 and 6, it may be expanded from o' to o2).

Referring to FIG. 13, the cross-section of the gasket 500 cut in the winding axis direction centered on the winding axis before being compressed may have a rectangular shape or a bar shape extending in the winding axis direction. For example, the maximum radial diameter of the cross-section of the gasket 500 cut in the winding axis direction may be expanded (referring to FIGS. 6 and 12, it may correspond to the maximum diameter of the injection plug 400 expanding from d1 to d1'). For example, the winding axis direction length of the cross-section of the gasket 500 cut in the winding axis direction may be reduced (referring to FIGS. 6 and 12, it may correspond to the winding axis direction length of the injection plug 400 being reduced from W' to W).

According to an embodiment, during the process of riveting the injection plug preform 40 to the battery housing 200, the injection plug 400 may be fixed outside the battery housing 200. According to an embodiment of the present disclosure, the riveting may be performed outside the battery housing 200. Accordingly, when manufacturing the battery cell 10, the generation of foreign matter inside the battery housing 200 may be suppressed.

According to an embodiment, the method for manufacturing a battery cell may further include, between the second step and the third step, an electrolyte injection step; a pre-charge step of partially charging the battery cell 10 to activate the battery cell 10; a formation step of charging the battery cell 10 to a higher voltage; and a degassing step of removing gas generated inside the battery cell 10.

The electrolyte injection step may be a step of injecting an electrolyte into the injection port H1. By injecting the electrolyte into the battery housing 200, ions (e.g., lithium ions) constituting the electrolyte may move smoothly between the first electrode and the second electrode. However, after the electrolyte injection step, the electrolyte may remain around the injection port H1 (the injection port periphery 310). Therefore, the residual electrolyte may be removed using a laser cleaning process or the like.

The pre-charge step is an initial charging process, and may typically proceed slowly at a low current. It may enhance the stability of the battery cell 10 and reduce the risk of thermal runaway that may occur in a future charging and discharging process.

The formation step is a process of repeatedly charging and discharging the battery cell 10, and may precisely control the charge rate and the discharge rate to verify that the battery cell 10 operates normally.

The degassing step may be a step of removing gas remaining inside the battery cell 10. If gas generated during the formation step of repeating charging and discharging remains inside the battery cell 10, it may cause problems such as expansion of the battery cell 10 or an increase in internal pressure. In particular, a degassing step may be necessary for materials that generate a lot of gas, such as nickel-cobalt-manganese (NCM) batteries and manganese-rich (Mn-rich) batteries. Therefore, the battery cell 10 may be placed under vacuum or special equipment may be used to emit the gas. Once the gas inside the battery cell 10 is removed, the risk of volume expansion, damage, or ignition of the battery cell 10 may be reduced, and the life and performance of the battery cell 10 may be stably maintained.

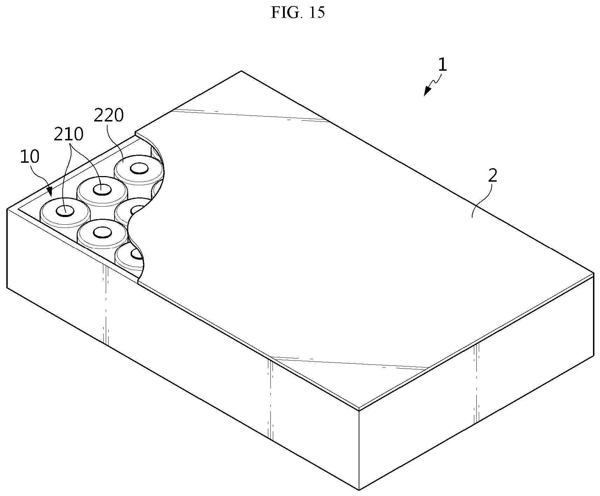

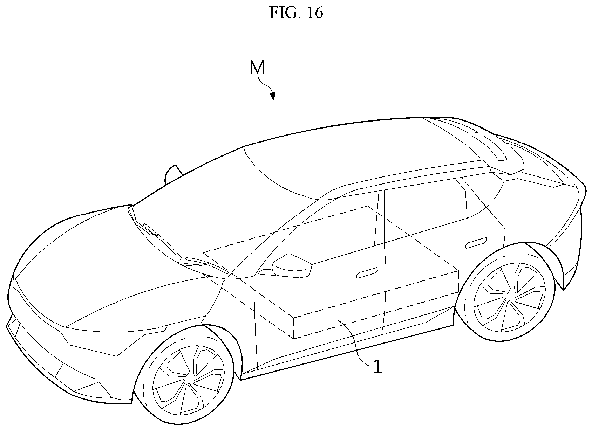

FIG. 15 is a view for describing a battery pack according to an embodiment of the present disclosure. FIG. 16 is a view for describing a vehicle including the battery pack of FIG. 15.

Referring to FIG. 15, a battery pack 1 according to the present disclosure may include at least one battery cell 10 according to the present disclosure described above. Additionally, the battery pack 1 according to the present disclosure may include a pack housing 2 capable of accommodating the at least one battery cell 10. The battery pack 1 may be configured using a battery module, which is an intermediate form of assembly, or may be configured directly without a battery module as illustrated. Since the battery cell 10 itself has a large volume, there may be no particular difficulty in implementing the battery pack 1 even without using an intermediate structure called a battery module.

In addition, the battery pack 1 may further include various components in addition to the battery cell 10, for example, components of the battery pack 1 known at the time of filing of the present disclosure, such as a BMS, a pack case, a relay, a current sensor, and the like.

A plurality of battery cells 10 may be included in the battery pack 1. The battery cells 10 may be arranged in a predetermined number of rows, and may be arranged so that both the electrode terminal 220 having the first polarity and the electrode terminal 210 having the second polarity are placed on the upper side in each battery cell 10. Therefore, when electrically connecting the plurality of battery cells 10, both the positive electrode and the negative electrode may be connected in one direction, thereby simplifying the electrical connection structure. Accordingly, energy density may be improved by increasing the number of battery cells 10 that can be mounted in the same space, and electrical wiring work may be facilitated. Therefore, the space efficiency is excellent, and the electrical wiring efficiency is high, which has a significant improvement effect in the assembly process of an electric vehicle, and the assembly and maintenance of the battery pack 1. And, each battery cell 10 may have a higher energy density than a conventional cell, as described above. The battery pack 1 with the increased energy density in this way may store the same energy while reducing the volume and weight thereof.

Therefore, if the battery pack 1 to which these battery cells 10 are applied is mounted on a vehicle such as a vehicle M using electricity as an energy source as illustrated in FIG. 16, the mileage of the vehicle per unit of energy may be further expanded.

In addition, since electrical wiring may be performed on the bottom portion of the battery housing 200 and the side where the electrode terminal 210 is positioned, and may not be performed on the cap 300 positioned at the opposite side thereof, the effect of the vent may be maximized when the vent portion V is configured on the cap 300 so as to be vented in the direction of the cap 300. Additionally, if a heat sink, a cooling plate, or a tray is positioned on the cap 300 side, the purpose of assembly and cooling may be effectively achieved regardless of the electrical wiring connection part. In addition, the gas emitted from the inside of the secondary battery is emitted downward by assembling the vent portion V to be placed downward. Usually, the secondary battery is mounted at a lower position than the passengers of a vehicle such as an EV, and thus if the gas is emitted upward from the secondary battery, it may cause harm to the passengers. The battery cell 10 of the present disclosure may effectively emit high-pressure gas inside the secondary battery, and is also safe because of being irrelevant to the electrical wiring connection part at the top, and furthermore, when the gas is emitted due to the breakage of the vent portion V, it is emitted downward and does not cause harm to the passengers, thereby greatly improving safety.

Referring to FIG. 16, a vehicle M according to the present disclosure may include at least one battery pack 1 according to the present disclosure.

The battery cell 10 according to the present disclosure may be applied to vehicles such as electric vehicles or hybrid vehicles. That is, the vehicle M according to the present disclosure may include the battery cell 10 according to the present disclosure or the battery pack 1 according to the present disclosure. Additionally, the vehicle M according to the present disclosure may further include various other components included in the vehicle, in addition to the battery cell 10 or the battery pack 1. For example, the vehicle M according to the present disclosure may further include a vehicle body, a motor, a control device such as an electronic control unit (ECU), and the like, in addition to the battery cell 10 according to the present disclosure. The vehicle M includes a four-wheeled vehicle and a two-wheeled vehicle. The vehicle M may operate by receiving power from the battery pack 1 according to an embodiment of the present disclosure.

The present disclosure has been described hereinabove with reference to a limited number of embodiments and drawings, but the present disclosure is not limited thereto and it is obvious that a variety of modifications and variations may be made thereto by those having ordinary skill in the art within the technical aspect of the present disclosure and the scope of the appended claims and their equivalents.

## Claims

1. A battery cell comprising:
an electrode assembly in which a first electrode, a second electrode, and a separator interposed therebetween are wound around a winding axis;
a battery housing configured to accommodate the electrode assembly through an open end formed on one side;
a cap covering the open end and having an injection port formed centrally;
an injection plug configured to be inserted into the injection port and configured to seal the injection port; and
a gasket interposed between the injection plug and the cap and having chemical resistance to an electrolyte.

2. The battery cell according to claim 1,
wherein the gasket has a heat deflection temperature of 130 degrees or higher and 170 degrees or lower under a load of 66 psi.

3. The battery cell according to claim 1,
wherein the gasket has a water absorption rate of 0.05% or higher and 0.15% or lower.

4. The battery cell according to claim 1,
wherein the gasket has a tensile strength of 50 MPa or more and 70 MPa or less.

5. The battery cell according to claim 1,
wherein the gasket comprises polybutylene terephthalate (PBT).

6. The battery cell according to claim 1,
wherein the injection plug is configured with a blind rivet.

7. The battery cell according to claim 1,
wherein the injection plug comprises:
a body portion inserted into the injection port;
a flange portion covering the injection port at the upper side of the cap and extending outward in a radial direction perpendicular to the winding axis direction from the upper end of the body portion; and
a plastic deformation portion at least partially extending outward in the radial direction from the lower end of the body portion.

8. The battery cell according to claim 7,
wherein the diameter of the flange portion is greater than the inner diameter of the injection port.

9. The battery cell according to claim 7,
wherein the maximum diameter of the plastic deformation portion is greater than the inner diameter of the injection port.

10. The battery cell according to claim 7,
wherein at least a portion of the plastic deformation portion comprises a horizontal plane substantially parallel to the lower surface of the cap.

11. The battery cell according to claim 1,
wherein the injection plug comprises a mandrel hole extending in the winding axis direction from the upper surface of the injection plug.

12. The battery cell according to claim 1,
wherein the injection plug further comprises a mandrel piece disposed inside the injection plug.

13. The battery cell according to claim 1,
wherein the injection plug comprises a material having an elongation.

14. The battery cell according to claim 1,
wherein the gasket has a ring shape surrounding the injection port periphery.

15. The battery cell according to claim 7,
wherein the gasket is disposed between the upper surface of the cap and the lower surface of the flange portion of the injection plug.

16. The battery cell according to claim 1,
wherein the gasket has a circular cross-section when cut in the winding axis direction centered on the winding axis.

17. The battery cell according to claim 1,
wherein the gasket has a rectangular cross-section when cut in the winding axis direction centered on the winding axis.

18. The battery cell according to claim 7,
wherein the gasket has a cylindrical structure that surrounds the side surfaces of the body portion and the plastic deformation portion and is open on both sides facing the winding axis direction.

19. The battery cell according to claim 18,
wherein the gasket comprises a curved surface, and at least a portion thereof protrudes in the radial direction.

20. The battery cell according to claim 1,
wherein the gasket has an elongation of 40% or more and 150% or less.

21. The battery cell according to claim 1,
wherein the gasket has a flexural modulus of 300 MPa or more and 2500 MPa or less.

22. A method for manufacturing a battery cell, comprising:
a first step of inserting an electrode assembly in which a first electrode, a second electrode, and a separator interposed therebetween are wound around a winding axis through an open end of a battery housing;
a second step of covering the open end of the battery housing with a cap;
a third step of inserting an injection plug preform into an injection port formed in the cap;
a fourth step of inserting a gasket between the injection plug preform and the cap; and
a fifth step of connecting a riveting gun to a mandrel inserted into the injection plug preform and pulling the riveting gun upward to seal the injection port.

23. The method for manufacturing a battery cell according to claim 22,
wherein when the riveting gun is pulled upward, the injection plug preform is plastically deformed.

24. The method for manufacturing a battery cell according to claim 22,
wherein a mandrel hole extending in the winding axis direction is formed in the injection plug preform, and
wherein the injection plug preform is configured such that the mandrel is inserted into the mandrel hole.

25. The method for manufacturing a battery cell according to claim 24,
wherein the mandrel comprises a mandrel pin portion at least partially protruding outward from the injection plug preform; a mandrel head portion extending radially further outward than the mandrel pin portion from the lower end of the mandrel pin portion; and a vulnerable portion positioned between the mandrel pin portion and the mandrel head portion.

26. The method for manufacturing a battery cell according to claim 25,
wherein the mandrel hole comprises a first region having an inner diameter of a first length; and a second region positioned below the first region and having an inner diameter of a second length longer than the first length.

27. The method for manufacturing a battery cell according to claim 26,
wherein the diameter of the mandrel head portion is longer than the first length.

28. The method for manufacturing a battery cell according to claim 22,
wherein when the mandrel is pulled upward, the length of the injection plug preform in the winding axis direction is reduced, and the maximum diameter of the injection plug preform expands longer than the inner diameter of the injection port.

29. The method for manufacturing a battery cell according to claim 22,
wherein when the mandrel is pulled upward, the gasket is compressed in the winding axis direction, and thus the length of the gasket in the winding axis direction is reduced.

30. The method for manufacturing a battery cell according to claim 25,
wherein when the mandrel is pulled upward, the mandrel pin portion and the mandrel head portion are separated from the vulnerable portion when a certain force or more is applied.

31. The method for manufacturing a battery cell according to claim 22, further comprising:
between the second step and the third step,
a step of injecting an electrolyte into the injection port;
a pre-charge step of partially charging the battery cell to activate the battery cell;
a formation step of charging the battery cell to a higher voltage; and
a degassing step of removing gas generated inside the battery cell.

32. A battery pack comprising at least one battery cell described in any one of claims 1 to 21.

33. A vehicle comprising at least one battery cell described in any one of claims 1 to 21.
